# EUROPEAN PATENT APPLICATION

(11) **EP 4 437 831 A1**
(43) Date of publication of application: **02.10.2024**
(21) Application number: 23166153.9
(22) Date of filing: 31.03.2023
(51) Int. Cl.: A01D 89/00, A01D 41/10, A01F 15/10

(54) **GRASS PICKUP HEADER**

(71) Applicant: CNH Industrial Belgium N.V., 8210 Zedelgem (BE)
(72) Inventor: VAN BELLEGHEM, Stijn, 8210 Zedelgem (BE); BEELAERT, Simon, 8210 Zedelgem (BE); BLANCKE, Jeffrey, 8210 Zedelgem (BE)
(74) Representative: CNH Industrial IP Department

(57) **Abstract**

A pickup assembly 2 for an agricultural harvester 1 comprises a pickup assembly frame 200. A pickup unit 10 is carried by the pickup assembly frame 200 and configured to pick up a swath of crop from the ground. The pickup assembly 2 further comprises at least one height sensor 300, 310, 320 mounted to the pickup unit 10 and configured to generate a height signal representative of a distance between the pickup unit 10 and the ground.

## Description

### TECHNICAL FIELD

The present invention relates to a pickup assembly for an agricultural harvester, the pickup assembly comprising a pickup assembly frame, and a pickup unit carried by the pickup assembly frame and configured to pick up crop from a field.

### BACKGROUND

Certain agricultural machines, such as forage harvesters, forage wagons, and balers, collect crop material that has been cut from the field. The component of such agricultural machines which gathers the crop material and feeds it further into the machine for processing is generally known as a pickup assembly. A typical pickup assembly comprises a pickup unit in the form of a pickup drum rotatably mounted on the pickup assembly frame. The pickup drum, which is also known as a pickup reel, has radially projecting tines to collect the crop material and propel it upwards, past a guiding element, and then into a feeding auger that moves the crop laterally towards a feed channel through which the crop material is conveyed into the machine for subsequent processing. Such subsequent processing may, for example, involve baling, threshing, chopping, storing and/or depositing. The guiding element is generally referred to as a wind guard, and serves the purposes of restricting the movement of the collected crop material in the forward and upward direction, shielding the crop flow path from wind influence and guiding the crop material efficiently into the feed channel.

The pickup assembly frame is typically carried by the agricultural machine and is supported above the ground by a plurality of supporting wheels. While the supporting wheels may comprise a suspension system to dampen vertical movements of the pickup unit, the exact height of the pickup unit may be difficult to control. For example, uneven terrain can cause the pickup unit to occasionally hit the ground, which may damage the pickup reel and the pickup tines. In addition, setting the pickup header at a height that is too high can lead to crop waste. This may lead to reduced yields and profitability.

In addition, forage harvesters typically have a recommended speed range for optimal performance and safety. A combination of high speed, low pickup unit height, and uneven ground may lead to damage to various parts such as to the tines of the pickup unit and to the frame, while driving too slowly can reduce the efficiency and throughput of the machine. If the pickup unit height cannot be controlled quickly and accurately, the forage harvester may need to be operated at a speed below the optimal speed and/or with the pickup unit set at a higher than optimal height.

It is an aim of the present invention to address the problems described above.

### SUMMARY OF THE INVENTION

The present invention relates to a pickup assembly for an agricultural harvester, the pickup assembly comprising a pickup assembly frame, a pickup unit carried by the pickup assembly frame and configured to pick up a swath of crop from the ground, wherein the pickup assembly further comprises at least one height sensor mounted to the pickup unit and configured to generate a height signal representative of a distance between the pickup unit and the ground.

By mounting the height sensor to the pickup unit, the height of the pickup assembly above the ground may be controlled more accurately due to the location of the height sensor being as close as possible to the most critical part of the pickup assembly. The pickup unit is typically closer to the ground than other components of the harvester and may comprise rotating tines or other fragile features that can get damaged easily when hitting the ground. The now claimed invention is particularly beneficial when the harvester moves over uneven terrain, as the height sensor being located so close to the pickup unit reduces the risk of erroneous measurements caused by the ground directly underneath the height sensor not being at the exact same height as the ground directly underneath the pickup unit. The height sensor according to the invention further provides the advantage of being able to provide real-time feedback to the controller of the harvester such that the harvester can react instantaneously to changes in the height of the pickup unit relative to the ground.

In some embodiments, the at least one height sensor may comprise a feeler that is pivotably connected to the pickup unit via an angle sensor, the feeler being configured to contact the ground, and wherein the height signal is dependent on a rotational angle of the feeler relative to the angle sensor.

The pickup assembly may further comprise a biasing member, mounted between the pickup unit and the feeler for biasing the feeler towards the ground. The force provided by the biasing member ensures that the feeler maintains contact with the ground, even when encountering bumps or uneven terrain. Advantageously, this ensures that the height signal that is generated by the height sensor is accurate.

In some embodiments, the feeler may be made of a polymer. In other embodiments, the feeler be made of a metal. Advantageously, a polymer feeler can be less expensive and light in weight, making it easier and less expensive to manufacture. Additionally, a polymer feeler may be less prone to weather damage, which may be advantageous for operating the harvester in various weather conditions. Alternatively, a metal feeler may be more durable and resistant to deformation than a polymer feeler, which may be beneficial when operating the harvester in harsh terrains.

In some embodiments, the at least one height sensor may comprise a distance sensor that is configured to emit a wave signal towards and receive a reflection of the wave signal from the ground, and wherein the height signal is dependent on a characteristic of the reflection of the wave signal.

The wave signal transmitted by the distance sensor has desirable properties that enable the height of the pickup assembly relative to the ground without contacting the ground and regardless of ground conditions. Specifically, the wave signal generated by the distance sensor reflects off the ground surface at a high accuracy regardless of changes in soil conditions or encounters with debris, which may otherwise affect the accuracy of a physical contact sensor.

In some embodiments, the wave signal may be an ultrasound signal, an infrared LED signal, or a laser signal.

In some embodiments, the pickup assembly may comprise at least two height sensors, distributed along a longitudinal axis of the pickup unit.

By comparing the height signals generated by the different distance sensors, the controller of the harvester can instruct the actuators to adjust the height of the pickup assembly to maintain a substantially constant height above the ground, even on uneven terrain. Optionally, the harvester may be configured to tilt the pickup assembly relative to harvester chassis in order to position the pickup unit at the same height across its full width. Increasing the number of distance sensors may further help to obtain more accurate measurements of the distance between the pickup unit and the ground. For example, by comparing the height signals generated by the two distance sensors, the height of the pickup assembly relative to the ground may be calculated based on the height signal generated by the height sensor that is closest to the ground. Alternatively, the different sensor signals may, e.g., be averaged or anomalous sensor readings that may indicate a malfunctioning of one of the sensors can be ignored.

In some embodiments, the pickup assembly may further comprise at least one gauge wheel mounted to the pickup assembly frame via a linear actuator, wherein the linear actuator is configured to adjust the distance between the pickup unit and the ground. This provides the pickup assembly with multiple contact points to the ground on which the height of the pickup assembly relative to the ground can be adjusted. Advantageously, this is beneficial when the pickup assembly travels over uneven terrain and the ground under the harvester wheels is not parallel with the ground under the pickup assembly. In such situations, the height of the pickup assembly may, e.g., be adjusted on just one gauge wheel such that the height of the pickup unit relative to the ground is the same across its full width.

In special embodiments, the pickup unit may be movably mounted to the pickup assembly frame, and the pickup assembly may further comprise a pickup unit adjuster, configured to move the pickup unit relative to the pickup assembly frame in order to adjust the distance between the pickup unit and the ground. This enables the height of the pickup unit to be adjusted without changing the height of the whole pickup assembly. Advantageously, this reduces the lift force required by just lifting those parts that are at risk of damage, such as the tines or other parts of the pickup drum. Furthermore, without the need to lift and drop the full mass of the pickup assembly, a faster response to variations in the height of the pickup unit is made possible.

According to a further aspect of the invention, an agricultural harvester is provided comprising a pickup assembly as described above and a controller operatively coupled to the at least one height sensor to receive the height signal therefrom and to generate a height adjustment signal for controlling the distance between the pickup unit and the ground. The agricultural harvester may, e.g., be a forage harvester, a round baler, a square baler, or a forage wagon.

In some embodiments, the agricultural harvester may further comprise a chassis, a feeder carrying the pickup assembly and pivotably mounted to the chassis, and a lift actuator mounted between the chassis and the feeder, the lift actuator being operatively coupled to the controller and configured to pivot the feeder in dependence of the height adjustment signal.

### BRIEF DESCRIPTION OF THE DRAWINGS

Embodiments of the invention will now be described by way of example with reference to the accompanying drawings, in which:
Figure 1 schematically shows side view of a forage harvester with a pickup assembly according to an embodiment of the invention.
Figure 2 schematically shows a cross section of a pickup assembly for use with the forage harvester of Figure 1.
Figure 3 schematically shows a cross section of a pickup assembly according to an alternative embodiment of the invention for use with the forage harvester of Figure 1.

### DETAILED DESCRIPTION

In the following, a pickup assembly is described in which the above-described invention may be advantageously used.

The directions up, down, forward, and rearward are herein defined relative to the general horizontal orientation and driving direction of an agricultural harvester and its attached pickup assembly when moving over a field and picking up crop.

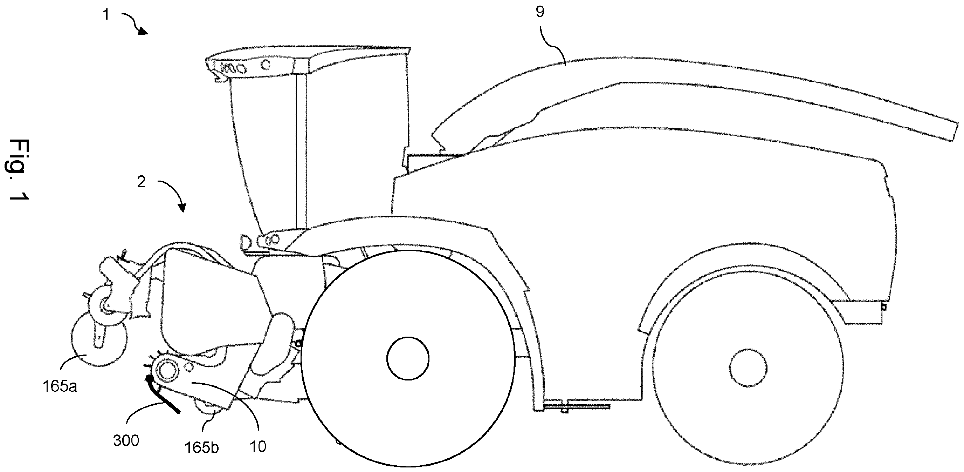

Figure 1 shows a schematic side view of an exemplary embodiment of an agricultural vehicle according to the invention, illustrated in the form of a forage harvester 1. The harvester 1 comprises a chassis, a feeder that is pivotably mounted to the chassis, a pickup assembly 2 that is carried by the feeder, and a lift actuator mounted between the chassis and the feeder. A height sensor 300 forms part of the pickup assembly 2 which is configured to generate a signal indicative of the height of the pickup assembly 2 relative to the ground.

The harvester 1 is designed to gather swaths of crops such as grass or alfalfa that have been previously cut and have been arranged on the field by a combine harvester or a mower. As the harvester 1 advances through a field, the crops are gathered by the pickup assembly 2 and transported to a central crop inlet of the harvester 1, where they enter the harvester 1 through a set of feed rolls. The feed rolls guide the crops in the form of a mat with a given thickness towards a cutting drum, which rotates at high speed, about a rotation axis that is transversal to the direction of movement of the incoming crops. Knives are mounted on and distributed along the full circumference of the drum and pass by a stationary shear bar as the drum rotates, thereby chopping the crops into small pieces which are further transported between the cutting drum and a concave. The chopped material is then ejected by a blower through a spout 9. Because the current invention concerns an improvement to the pickup assembly 2, the internal crop processing parts of the forage harvester 1 are not shown in the drawings.

The agricultural harvester 1 further comprises a controller which is communicatively coupled to the lift actuator and to the height sensor 300 and which is configured to control the height of the pickup assembly 2 relative to the ground. Specifically, the lift actuator is configured to pivot the feeder based on a height adjustment signal generated by the controller, which is dependent on the height signal generated by the height sensor 300, such that the height of the pickup assembly 2 may be adjusted. For example, when the height sensor 300 detects that the pickup assembly 2 is too close to the ground, the controller generates a height adjustment signal that is transmitted to the lift actuator such that the height of the feeder is adjusted. Consequently, this adjusts the position of the pickup assembly 2 relative to above the ground.

It should be appreciated that while the agricultural vehicle is illustrated and described as a forage harvester 1, in other embodiments the pickup assembly 2 may be used in combination with other agricultural vehicles such as a forage wagon or baler. If used with a baler, this may, e.g., be a large square baler, a small square baler, or a round baler.

The pickup assembly 2 shown here comprises two optional front support wheels 165a and two optional rear support wheels 165b that are connected to a pickup assembly frame 200 of the pickup assembly 2 and are configured to support the pickup assembly frame 200 above the ground. The front support wheels 165a of the pickup assembly 2 are usually height adjustable through a manually operated height adjustment mechanism 250. In embodiments of the current invention, linear actuators may be installed to allow the user to adjust the height of the front support wheels 165a remotely and while harvesting. In addition to providing support for the pickup assembly 2, the front support wheels are typically provided to ensure that the pickup unit 10 is kept at a safe distance above the ground. When the height sensors 300 according to the invention and an active height control system are provided, the front support wheels 165a may be dispensed with.

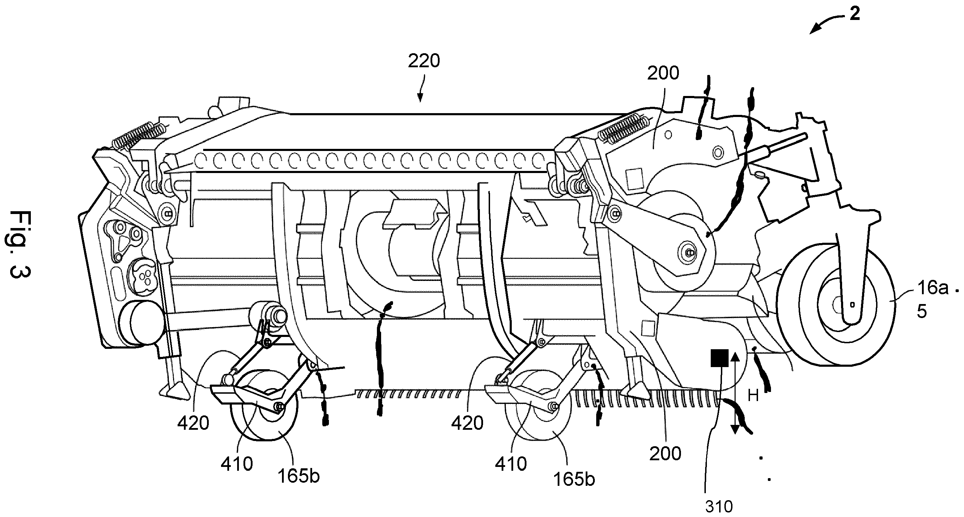

As shown in more detail in Figure 3, the pickup assembly 2 may further comprise optional rear support wheels 165b, provided with pivotable support wheel arms 410 which connect the rear support wheels 165b to the pickup assembly frame 200. In this embodiment, the support wheel arms 410 are connected to the pickup assembly frame 200 via pneumatic or hydraulic cylinders 420. The pressure in these cylinders 420 may either be adjustable to control the pivoting of the support wheel arms 410 and the height of the rear support wheels 165b relative to the pickup assembly frame 200, or may just provide some predetermined biasing force to ensure that the rear support wheels 165b keep in contact with the ground while riding over the field.

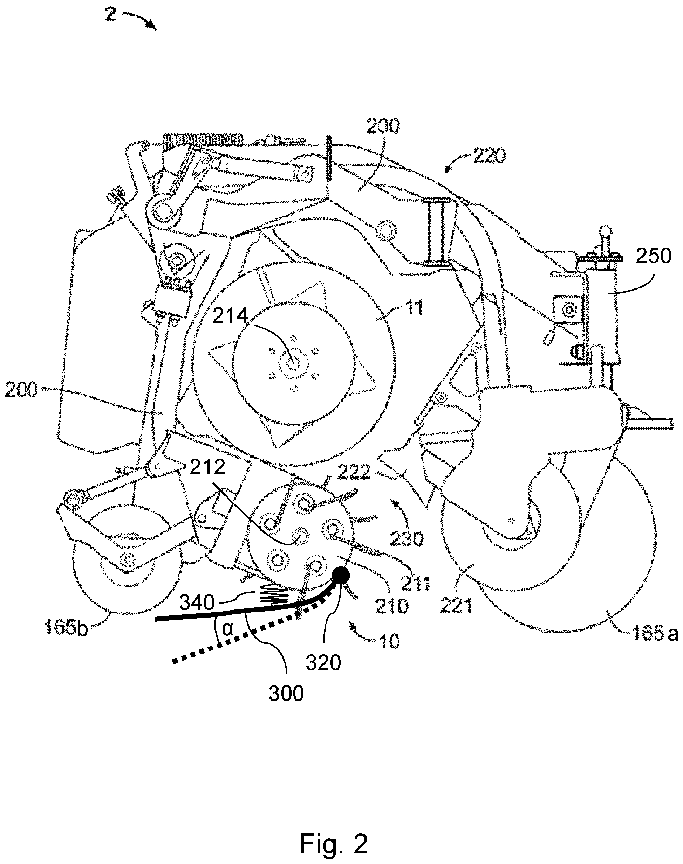

Already shown in Figure 1, but shown in more detail in Figure 2, are a pickup unit 10 that is carried by the pickup assembly frame 200 and configured to pick swaths of crop material from the field and the at least one height sensor 300, mounted on the pickup unit 10. As the pickup unit 10 picks up the crop material, the crop material is conveyed to the centre of the pickup assembly 2 by a feeder auger 11, and from there into the feeder of the harvester 1.

The pickup unit 10 includes a pickup drum 210, which is a generally cylindrical component that is connected to the pickup unit 10 by a central shaft or axle 212. In operation, the pickup drum 210 rotates about an axis that is coincident with the centre of the axle 212 of the pickup unit 10 and which is generally transverse to the direction of movement of the harvester 1. A plurality of tines 211 are mounted to the pickup drum 210 and project radially outwards such that rotation of the pickup drum 210 causes the tines 211 to engage with the crop material on the ground.

The feeding auger 11 conveys the crop material that is picked up from the ground by the tines 211 of the pickup drum 210 toward the central crop inlet of the harvester 1, or to a central location where a further conveyor conveys the crop material toward the interior of the harvester 1. The feeding auger 11 is a generally long, screw shaped blade that is formed on a shaft 214 that extends from one side of the pickup assembly frame 200 to the other side. The feeding auger 11 is positioned above the pickup drum 210 and the tines 211 of the pickup unit 10 such that, in operation, rotation of the feeding auger 11 moves the crop material along its length towards the central crop inlet of the harvester 1.

The pickup assembly 2 also includes a wind guard assembly 220 which is configured to guide the crop material towards the crop material conveyor. The wind guard assembly 220 comprises a cylindrical roller 221, which defines a roller axis about which the roller 221 rotates during operation, and which is generally transverse to the direction of movement of the harvester 1. The wind guard roller 221 is followed by a guidance plate 222, and an infeed channel 230 is formed between the wind guard roller 221 and an infeed channel surface of the guidance plate 222 on one side and the pickup drum 210 with its tines 211 on the other side.

As shown in the preferred embodiment of Figure 2, the pickup drum 210, feeding auger 11, and wind guard assembly 220 are all carried by the assembly frame 200 of the pickup assembly 2, as may other functional parts of the pickup assembly 2. Typically, the pickup assembly 2 is provided as a separate header that can be mounted to the front of the harvester 1 when needed. In other embodiments, the pickup assembly 2 is may be fixedly attached to a chassis of the forage harvester 1.

As the harvester 1 drives over the field, the pickup assembly 2 moves forward together with the harvester 1. On a sufficiently even field, the pickup assembly 2 moves over the field in a relatively horizontal orientation with the pickup unit 10 and pickup drum 210 at a constant height above the field surface. However, as the harvester 1 moves over uneven terrain, there may be a risk of parts of the pickup unit 10 hitting the ground and being damaged. For example, the tines 211 on the pickup drum 210 may run into bumps or pits which may cause them to be damaged.

Therefore, the at least one height sensor 300 is mounted to the pickup unit 10 and is configured to generate a height signal representative of the distance between the pickup unit 10 and the ground. The at least one height sensor 300 may, for example, be mounted to one or both of the outer ends of the pickup unit 10 or to some other static, i.e., not rotating, portion of the pickup unit 10. For example, the at least one height sensor may be located on a mounting bracket of the pickup drum 210 or to a plate portion covering the sides of the pickup unit 10.

In the embodiment shown in Figure 2, the at least one height sensor comprises a feeler 300 that is pivotably connected to the pickup unit 10 in the vicinity of the pickup drum 210 via an angle sensor 320. The feeler 300 is configured to contact the ground, and the angle sensor 320 is configured to determine a rotational angle α of the feeler 300 such that the height signal that is generated by the height sensor is dependent on a rotational angle of the feeler 300 relative to the angle sensor 320.

In the present embodiment, the rotational angle α is illustrated as the angle determined by the angle sensor 320 when the feeler 300 is moved from a neutral position, shown by the dashed line, when the feeler 300 is not in contact with the ground, to a loaded position, shown by the solid line, when the feeler 300 is in contact with the ground. The loaded position may be a position of the feeler 300 when the harvester travels over uneven terrain, such as over a hill, which causes the feeler 300 to engage with the ground and to rotate in a clockwise direction. In other words, the angle α may be defined as the angle between the feeler's 300 resting position, where the angle determined by the angle sensor 320 is zero degrees, and the feeler's 300 loaded position, where the angle determined by the angle sensor 320 is an arbitrary number that depends on how much the feeler 300 rotates when it is in contact with the ground. Alternatively, the rotational angle may be measured relative to any other predetermined rotational configuration of the angle sensor 320, as long as it is consistent and accurately reflects the height of the pickup unit above the ground.

In preferred embodiments, two or more feelers 300 and corresponding angle sensors 320 may be distributed along the longitudinal axis 212 of the pickup unit 10. For example, two angle sensors 320 may be mounted on a static portion of the pickup unit 10 adjacent the respective ends of the pickup drum 210. Advantageously, the signal generated by the two angle sensors 320 due to the rotation of the feelers 300 may be indicative of the tilt of the pickup assembly 2. By comparing the signals generated by the different angle sensors 320, the controller of the harvester 1 can adjust the height of the pickup assembly 2 accordingly to maintain a substantially constant height above the ground, even on uneven terrain.

The feeler 300 may be made of a polymer material, such as a plastic, or may be made of a metal. Advantageously, a polymer feeler can be less expensive and light in weight, making it easier and less expensive to manufacture. Additionally, a polymer feeler may be less prone to weather damage, which may be advantageous for operating the harvester 1 in various weather conditions. Alternatively, a metal feeler may be more durable and resistant to deformation than a polymer feeler, which may be beneficial when operating the harvester 1 in harsh terrains.

A biasing member 340 may be mounted between the pickup unit 10 and the feeler 300 for biasing the feeler 300 towards the ground. The biasing member 340 may be of any type, such as of a spring component or of a hydraulic cylinder. In the present embodiment, the biasing member is shown as a spring 340 which provides a spring force that ensures that the feeler 300 maintains contact with the ground, even when encountering bumps or uneven terrain. Advantageously, this ensures that the height signal that is generated by the height sensor 300 is accurate.

Although the biasing member is mounted between the pickup unit 10 and the feeler 300, it is foreseen that the biasing member may be mounted differently. For example, a biasing member may be integrated in the angle sensor 320 itself.

Figure 3 shows an alternative embodiment of the present invention where the at least one height sensor comprises a distance sensor 310 that is configured to emit a wave signal towards the ground and receive a reflection of the wave signal from the ground such that a height signal is generated that is indicative of the distance of the pickup unit 10 to the ground. The height signal generated by the distance sensor 310 is dependent on characteristics of the wave signal that is reflected from the ground. In the present embodiment, the distance to the ground is represented by the height H from the distance sensor 310 to the ground. The wave signal emitted by the distance sensor 310 may, e.g., be an ultrasound signal, an infrared LED signal, or a laser signal.

In preferred embodiments, two or more distance sensors 310may be distributed along the longitudinal axis 212 of the pickup unit 10. For example, two distance sensors 310 may be mounted on a static portion of the pickup unit 10 adjacent the respective ends of the pickup drum 210. Advantageously, the signal generated by the two distance sensors 310 may be indicative of the tilt of the pickup assembly 2. By comparing the signals generated by the different distance sensors 310, the controller of the harvester 1 can adjust the height of the pickup assembly 2 accordingly to maintain a substantially constant height above the ground, even on uneven terrain.

The positioning of the distance sensor 310 is not limited to the side of the pickup drum 210, as shown in Figure 3. The at least one distance sensor 310 may, for example, be mounted to one or both of the outer ends of the pickup unit 10 or to some other static, i.e., not rotating, portion of the pickup unit 10. For example, the at least one height sensor may be located on a mounting bracket of the pickup drum 210 or to a plate portion covering the sides of the pickup unit 10.

Optionally, the height adjustment mechanism 250 of the front support wheels 165a and/or the length adjustable arms 420 of the rear support wheels 165b may be communicatively coupled to the controller of the harvester 1 such that the support wheels 165a, 165b may be remotely controlled via this controller. This enables the height of the pickup assembly 2 to be controlled from several locations. Advantageously, this provides a more accurate and adaptive system for controlling the height of the pickup assembly 2 relative to the ground in real time.

By measuring the height of the pickup unit 10 relative to the ground at a fixed location that is close to the ground, the height of the pickup assembly 1 above the ground may be controlled more accurately. This is particularly beneficial when the harvester 1 moves over uneven terrain, as height sensor being located so close to the ground provides real-time feedback to the controller of the harvester 1 such that the harvester 1 can quickly adjust the height of the pickup unit to maintain a consistent height above the ground.

The highly accurate measurement of the height of those parts of the pickup assembly 2 having the highest risk of being damaged by contact with the ground, makes it possible to drive the harvester 1 at a higher speed. This even more so when the accurate height measurement is coupled to a quick adjustment mechanism for adapting the height of the pickup unit 10 above the ground. This allows for more efficient and profitable harvesting, while also reducing the risk of damage to the pickup unit 10.

According to a further embodiment of the present invention, the pick unit 10 may be pivotably connected to the to the pickup assembly frame 200 via at least one pickup unit joint. The pickup unit 10 may further comprise at least one pickup unit adjuster in the form of an actuator that is connected to the pickup unit 10 on one end and to the pickup assembly frame on another end. The pickup unit adjuster may be of any type. For example a hydraulic cylinder or an electric actuator may be used. The pickup unit adjuster enables the height of the pickup unit 10 to be adjusted without changing the height of the whole pickup assembly 2. Advantageously, this reduces the lift force required by just lifting those parts that are at risk of damage, such as the tines 211 or other parts of the pickup drum 210. Furthermore, without the need to lift and drop the full mass of the pickup assembly 2, a faster response to variations in the height of the pickup unit 10 is made possible.

## Claims

1. A pickup assembly (2) for an agricultural harvester (1), the pickup assembly (2) comprising:
a pickup assembly frame (200);
a pickup unit (10) carried by the pickup assembly frame (200) and configured to pick up a swath of crop from a ground;
wherein the pickup assembly (2) further comprises:
at least one height sensor (300, 310, 320), mounted to the pickup unit (10) and configured to generate a height signal representative of a distance between the pickup unit (10) and the ground.

2. A pickup assembly (2) as claimed in claim 1, wherein the at least one height sensor (300, 310, 320) comprises a feeler (300) that is pivotably connected to the pickup unit (10) via an angle sensor (320), the feeler (300) being configured to contact the ground, and wherein the height signal is dependent on a rotational angle of the feeler relative to the angle sensor (320).

3. A pickup assembly (2) as claimed in claim 2, further comprising a biasing member (340), mounted between the pickup unit (10) and the feeler (300) for biasing the feeler (300) towards the ground.

4. A pickup assembly (2) as claimed in claim 2 or 3, wherein the feeler (300) is made of a polymer.

5. A pickup assembly (2) as claimed in any of claims 2 to 4, wherein the feeler (300) is made of a metal.

6. A pickup assembly (2) as claimed in any preceding claim, wherein the at least one height sensor (300, 310, 320) comprises a distance sensor (310) that is configured to emit a wave signal towards and receive a reflection of the wave signal from the ground, and wherein the height signal is dependent on a characteristic of the reflection of the wave signal.

7. A pickup assembly (2) as claimed in claim 6, wherein the wave signal is an ultrasound signal, an infrared LED signal, or a laser signal.

8. A pickup assembly (2) as claimed in Claim 1, wherein the at least one height sensor (300, 310, 320) comprises at least two height sensors (300, 310, 320), distributed along a longitudinal axis of the pickup unit (10).

9. A pickup assembly (2) as claimed in any preceding claim, further comprising at least one gauge wheel (165a, 165b) mounted to the pickup assembly frame (200) via a linear actuator (250), wherein the linear actuator (250) is configured to adjust the distance between the pickup unit (10) and the ground.

10. A pickup assembly (2) as claimed in any preceding claim, wherein the pickup unit (10) is movably mounted to the pickup assembly frame (200), the pickup assembly (2) further comprising a pickup unit adjuster, configured to move the pickup unit (10) relative to the pickup assembly frame (200) in order to adjust the distance between the pickup unit (10) and the ground.

11. An agricultural harvester comprising a pickup assembly (2) as claimed in any preceding claim and a controller operatively coupled to the at least one height sensor (300, 310, 320) to receive the height signal therefrom, and to, based on the height signal, generate a height adjustment signal for controlling the distance between the pickup unit (10) and the ground.

12. An agricultural harvester as claimed claim 11, the agricultural harvester further comprising:
a chassis;
a feeder, carrying the pickup assembly (2) and pivotably mounted to the chassis; and
a lift actuator mounted between the chassis and the feeder, the lift actuator being operatively coupled to the controller and configured to pivot the feeder in dependence of the height adjustment signal.
